# NEUE EUROPÄISCHE PATENTSCHRIFT

(11) **EP 0 295 238 B2**
(45) Veröffentlichungstag und Bekanntmachung des Hinweises auf die Entscheidung über den Einspruch: **01.06.1994**
(45) Hinweis auf die Patenterteilung: 13.12.1989
(21) Anmeldenummer: 86902390.3
(22) Anmeldetag: 29.03.1986
(51) Int. Cl.: G01M 1/28

(54) **VERFAHREN ZUR UNWUCHTBESTIMMUNG UND VORRICHTUNG HIERZU**
PROCESS AND DEVICE FOR DETERMINING UNBALANCE
PROCEDE ET DISPOSITIF POUR DETERMINER LE BALOURD

(43) Veröffentlichungstag der Anmeldung: 21.12.1988
(73) Patentinhaber: Schenck Auto-Service-Geräte GmbH, D-64293 Darmstadt (DE)
(72) Erfinder: GUYOT, Volker, D-6087 Büttelborn 2 (DE)
(74) Vertreter: Brandt, Ernst-Ulrich, Dipl.-Phys., Dipl.-Ing.
(86) Internationale Anmeldenummer: EP8600195
(87) Internationale Veröffentlichungsnummer: WO8705999

(56) Entgegenhaltungen:
- DE-A- 1 698 111
- DE-A- 2 819 687
- GB-A- 112 477
- GB-A- 2 027 541
- US-A- 3 726 145

## Beschreibung

Vorrichtung zur Bestimmung der Unwuchtwirkungen an angetriebenen Rädern eines Kraftfahrzeugs und Vorrichtung zur Versorgung einer am Kraftfahrzeug anzuordnenden Unwuchtmeßeinrichtung mit Gleichstrom.

Die Erfindung betrifft ein Verfahren zur Bestimmung der Unwuchtwirkungen an angetriebenen Rädern eines Kraftfahrzeuges mit einer Unwuchtmeßeinrichtung einschließlich Schwingungsumformern und Bezugsmarkenabtastgeräten und eine Vorrichtung zur Versorgung einer am Kraftfahrzeug anzuordnenden Unwuchtmeßeinrichtung einschließlich Antreiber, Schwingungsumformer und Bezugsmarkenabtastgerät mit Gleichspannung.

Durch einen Prospekt der Firma Hofmann « Neue Qualitätsdimensionen und Rationalisierungswirkung durch Infrarotabtastung finishbalancer Ipi » vom Februar 1984 ist eine Unwuchtmeßeinrichtung mit Schwingungsumformern und Bezugsmarkenabtastgerät bekannt geworden. Hierbei erfolgt die elektrische Versorgung des Unwuchtmeßgeräts sowie der hierzu gehörenden Hilfsgeräte mittels Wechselstrom. Außer der beschränkten Einsatzfähigkeit einer derartigen Einrichtung zufolge Abhängigkeit vom Wechselstromnetz besteht darüber hinaus die Gefahr, daß gefährliche Potentialdifferenzen zwischen dem über die Kraftfahrzeugräder isoliert aufgestellten Fahrzeugchassis und dem, das Unwuchtmeßgerät Bedienenden, auftreten können, die das Leben des Bedienenden gefahrden. Dies gilt besonders auch dann, wenn Räder von Lastzügen oder Gelenkbussen beijederWitterung nurim Freien ausgewuchtet werden können. Unabhängig von diesen Gefährdungen werden auch wegen der räumlichen Ausdehnung - Kfz, LKW, Gelenkbus - einer solchen Meßanordnung Induktionsschleifen entstehen, die das Meßergebnis beeinflussen, z.B. im Sinne von Schwankungen der Anzeige oder sogar verfälschen können - falsches Meßergebnis. Außerdem ist es bei der so bekannt gewordenen Auswuchteinrichtung einschließlich der Hilfsgeräte erforderlich, das zu untersuchende Kraftfahrzeug zum Meßgerät, insbesondere im Hinblick auf eine Abtastung der am Kraftfahrzeugrad angebrachten Marke auszurichten. Hierzu ist es erforderlich, mehrere Probeläufe im Hinblick auf das Erkennen der Markierungen an den Rädern durchzuführen, was nicht nur aufwendig, sondern auch zufolge der erhöht ausgestoßenen Abgase umweltbelastend ist. Darüber hinaus muß bei einer Fernbedienung für das Messen der Unwucht beider Antriebsräder vom Fahrersitz aus zur Vermeidung der Überlastung des Ausgleichsgetriebes ständig eine Drehzahldifferenzüberwachung erfolgen.

Ausgehend hiervon liegt der vorliegenden Erfindung die Aufgabe zugrunde, von einer einzigen Person eine komplette Betriebsauswuchtung der Räder eines Kraftfahrzeugs durchführen zu lassen, eine die Umwelt nicht belastende Kontrolle der Justierung der Fahrzeugräder zu einem Bezugsmarkenabtastgerät durchzuführen gleichzeitig die durch Anschluß der Meßgeräte an Wechselstrom auftretenden Gefährdungen zu vermeiden und sicherzustellen, daß keine Induktionsschleifen entstehen, die zu einer Verfälschung der Unwuchtanzeige führen.

Diese Aufgabe wird durch die Merkmale des Anspruchs 1 gelöst. Durch Vorsehen mindestens einer magnetischen Halterung des Gehäuses des Bezugsmarkenabtastgerätes an einem Halter oder am Antreiber, und durch Vorsehen von Kontrollöffnungen im Gehäuse durch die das Ansprechen des Bezugsmarkenabtastgeräts auf die an den Kraftfahrzeugrädern angebrachten Markierungen können: durch Bewegen der Radmarkierungen vor dem Bezugsmarkenabtastgerät von Hand festgestellt werden Spricht das Bezugsmarkenabtastgerät auf die am Rad angeordnete Markierung nicht an, ist es durch die Magnethalterung des Gehäuses am Halter sehr leicht möglich, das Bezugsmarkenabtastgerät, das beispielsweise als Infrarotabtastgerät oder als Abtastgerät bestehend aus Laser und Diode ausgebildet ist, auf entsprechende Höhe und Entfernung zur Bezugsmarke einzujustieren. Damit entfallen insbesondere bei Einmannbedienung die häufigen Probeläufe, die zwingend erfordern, daß der Bedienende das zu untersuchende Kraftfahrzeug verlassen muß und durch zusätzliche Hilfsmittel, wie Kraftfahrzeugheber, nicht nur das Fahrzeug zur Bezugsmarkenabtasteinrichtung neu einjustieren muß, sondern auch die Schwingungsumformer neu in Kontakt mit der Aufhängung des Kraftfahrzeugrades bringen muß. Hierdurch werden für den Bedienenden die Wirkungen gefährlicher Potentialdifferenzen zwischen Fahrzeug und Netz völlig ausgeschaltet. Es werden die bisher zwangsläufig auftretenden Beeinflussungen und Verfälschungen vermieden, durch Kontrolle auf Erkennung der Radmarkierungen durch das Bezugsmarkenabtastgerät durch Bewegen der Radmarkierungen vor dem Bezugsmarkenabtastgerät von Hand wird der Probelauf vermieden.

Ferner wird zufolge Wegfalls von Probeläufen mit Brennkraftmaschinen bei der Einjustierung der Bezugsmarkenabtastgeräte die Umweltbelastung auf ein Mindestmaß herabgesetzt.

Bei einer Einrichtung zum Bestimmen der Unwucht von an Fahrzeugen montierten Rädern (DE-A-1 698 111) wird zur Bestimmung der Phasendifferenz zwischen der sinusförmigen Unwuchtschwingung und dem als Impuls auftretenden Bezugssignal ein elektronischer Schalter benutzt, der in Reihe mit einer Gleichspannungsquelle geschaltet ist. Die zum Antrieb des hochgebockten Rades verwendete Friktionsscheibe wird in bekannter Weise von einem mit Wechselstrom beaufschlagten Antriebsmotor angetrieben. Auch mit einer derartigen Einrichtung lassen sich die bereits genannten Schwierigkeiten, die dem Stand der Technik anhaften. nicht lösen.

Bei einer Einrichtung zur Bestimmung von Schwingungsamplituden (US-A-3 726 145) wird ein transistorisiertes Schwingungsmeßgerät einschließlich Anzeigegerät mittels zweier Batterien so angetrieben, daß der im Schwingungsmeßgerät angeordnete Transistor unter Vermeidung einer Temperatursteigerung einen minimalen Gleichstromverbrauch besitzt. Bei Anwendung einer derartigen Einrichtung zum Auswuchten hochgebockter Räder ist ebenfalls ein mit Wechselstrom versorgter Antreiber erforderlich. Hierdurch werden ebenfalls die bereits eingangs genannten Gefährdungen und Schwierigkeiten nicht beseitigt.

In der nachfolgenden Zeichnung wird die Erfindung näher erläutert. Es zeigen in schematischer Darstellung:
Fig. 1 ein erfindungsgemäßes Bezugsmarkenabtastgerät einschließlich Unwuchtmeßgerät und Spannungsversorgung
Fig. 1a einen Antreiber mit einem Bezugsmarkenabtastgerät
Fig. 2 zur Erläuterung des erfindungsgemäßen Meßverfahrens in Draufsicht und Ansicht ein zu untersuchendes Kraftfahrzeug.

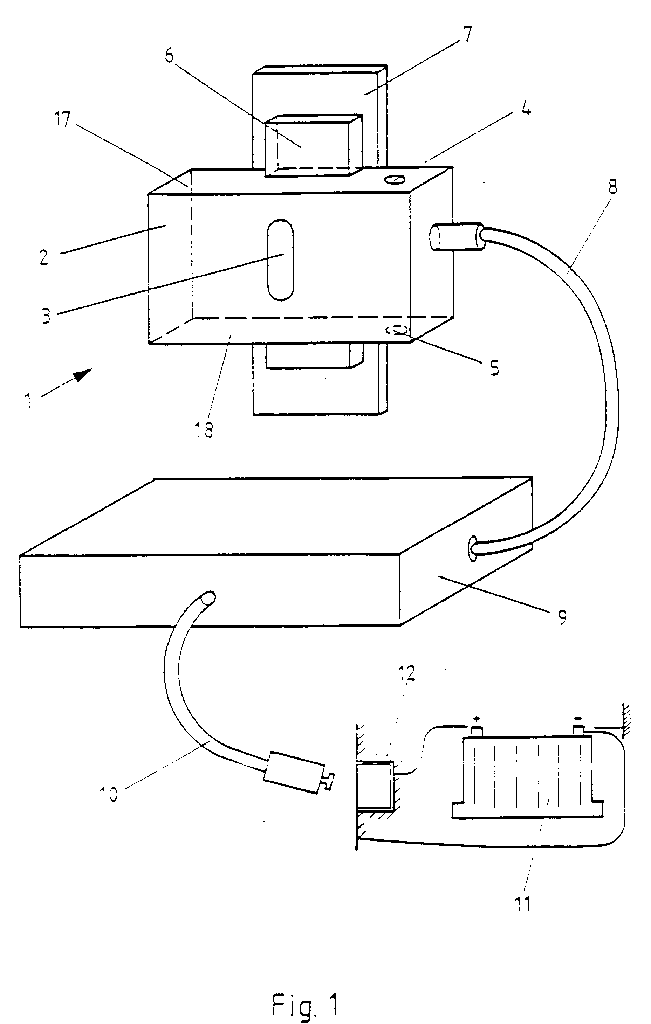

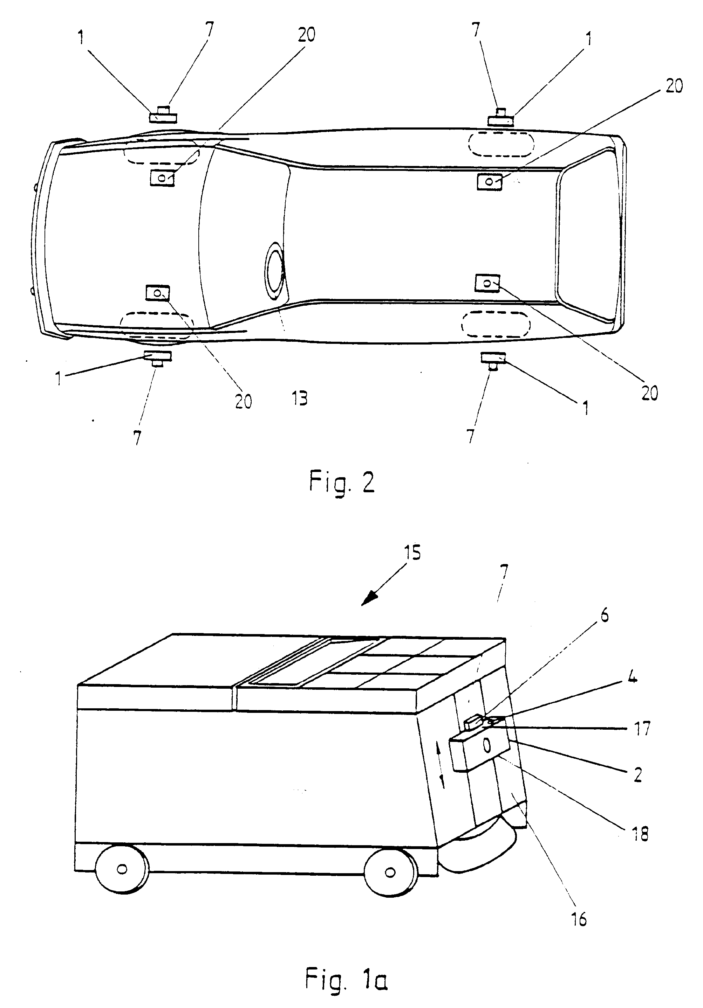

Ein Gehäuse 1 eines Bezugsmarkenabtastgerätes trägt an seiner einem Kraftfahrzeugrad zugekehrten Seite 2 beispielsweise eine zur Mitte des Gehäuses 1 symmetrische Öffnung 3, in der ein nicht dargestellter Optoempfängerund Optosender beispieiswei le Infrarot, Laser enthalten sind. Durch die symmetrische Anordnung kann das Gehäuse ohne weitere Umbauarbeiten für jedes Rad am Kraftfahrzeug verwendet werden. Durch Anordnung beleuchtbarer Kontrollöffnungen 4, 5, an zur Seite 2 orthogonalen Flächen 17, 19, die im wesentlichen parallel zur Aufstandsfläche des Kraftfahrzeuges sind, die dann aufleuchten, wenn die am Kraftfahrzeugrad angebrachte Markierung durch den Optoempfänger erkannt wurde, ist das Bezugsmarkenabtastgerät mit seinem Gehäuse 1 ohne zusätzlichen Probelauf allein durch Bewegen des Rades mit seiner Markierung vor dem Gehause 1 im Hinblick auf die Entfernung des Bezugsmarkenabtastgeräts zum Kraftfahrzeugreifen einstellbar. Durch die Anordnung mindestens einer magnetischen Halterung 6 am Rücken des Gehäuses 1 kann das Gehäuse 1, welches das Bezugsmarkenabtastgerät trägt an einem Halter 7 in seiner Höhe zum Kraftfahrzeugrad einjustiert werden oder es kann, wie in Fig. 1a schematisch dargestellt, an einer Stirnseite 16 eines Antreibers 15, wie mit Doppelpfeil dargestellt, verschoben werden.

Das Gehäuse 1 ist über eine Leitung 8 mit einer Unwuchtmeßeinrichtung 9 verbunden, die ihre Spannung gemäßAusführungsbeispiel nach Fig. 1 übereine Zuleitung 10 von einer Kraftfahrzeugbatterie 11 übereine Anschlußbuchse 12, beispielsweise den im Kraftfahrzeug eingebauten Zigarrenanzünder erhält.

In Fig. 2 sind in der Draufsicht beispielsweise bei einem vierradangetriebenen Fahrzeug vier Gehäuse 1 vorgesehen, die an vier Haltem 7 mittels der in Fig. 1 beschriebenen Halterung befestigt sind. Nach Abstützen des Fahrzeugs, wie in Fig. 2 dargestellt auf Schwingungsumformern 20, wird die untersuchende Person nachdem die vier Gehäuse 1 mit den Bezugsmarkenabtastgeräten zu den Rädern einjustiert wurden, sich hinter das Lenkrad 13 begeben, das Kraftfahrzeug starten und bei entsprechender Drehzahl sowohl die Unwuchtmeßwerte aus den Schwingungsumformern als auch die Bezugsmarken von den vier Bezugsmarkenabtastgeräten abrufen und in die Unwuchtmeßeinrichtung 9 einspeisen, die ihre Spannungsversorgung über den im Kraftfahrzeug angeordneten elektrischen Zigarrenanzünder 12 erhält. Hierbei kann die Übertragung leitungsgebunden oder drahtlos zum Unwuchtmeßgerät erfolgen.

## Patentansprüche

1. Vorrichtung zur Bestimmung der Unwuchtwirkungen an angetriebenen abgestützen Rädern eines Kraftfahrzeuges mit einer Unwuchtmesseinrichtung einschließlich Schwingungsumformern und Bezugsmarkenabtastgeräten, bei der die Gleichspannungsversorgung des Unwuchtmessgerätes (9), der Schwingungsumformer und der Bezugsmarkenabtastgeräte (1) von der Batterie (11) des Kraftfahrzeugs übernommen wird, bei der bei Antreiben der Räder durch den Motor des Fahrzeugs jedem angetriebenen abgestützten Rad ein Bezugsmarkenabtastgerät (1) und ein Schwingungsumformer zugeordnet sind, bei der ohne Probelauf bei konstanter, durch die Bedienungsperson mittels Gasgeben erzeugter Geschwindigkeit der Räder des Fahrzeugs die Drehzahl eines jeden Rades an die Unwuchtmesseinrichtung (9) gemeldet wird, und bei der im entsprechenden Drehzahlbereich der Räder im selben Messlauf die Unwuchtwerte von der Person abgerufen und die Unwuchtmessung durchgeführt wird, bei der am Gehäuse (1) der Bezugsmarkenabtastgeräte mindestens eine magnetische Halterung (6) vorgesehen ist, mit der das Gehäuse (1) zu einem, mit einer Bezugsmarke versehenen Kraftfahrzeugrad an einem Halter (7) oder am Antreiber (15) ausgerichtet wird, bei der das Gehäuse (1) an seiner, dem Kraftfahrzeugrad zugekehrten Seite (2) eine Öffnung (3) für einen Optosender und -empfänger besitzt, und bei der das Gehäuse (1) auf den zur Seite (2) orthogonalen Gehäuseflächen (17, 18), die im wesentlichen parallel zur Aufstandsfläche des Kraftfahrzeugs sind, beleuchtbare Kontrollöffnungen (4,5) trägt, die dann aufleuchten, wenn die am Kraftfahrzeugrad angebrachte Markierung durch den Optoempfänger erkannt wird.

## Claims

1. A device for determining the effects of unbalance on supported drive wheels of a powered vehicle with an unbalance measuring arrangement including oscillation converters and reference marker scanning devices, in which the d.c. voltage supply of the unbalance measuring device (9), the oscillation converter and the reference marker scanning devices (1) is undertaken by the battery (11) of the vehicle, in which when driving the wheels via the engine of the vehicle there is associated with each supported drive wheel a reference marker scanning device and an oscillation converter, in which without a test run and at constant speed of the wheels of the vehicle by the operator opening the throttle, the rotational speed of each wheel is registered at the unbalance measuring device (9), and which in the appropriate range of rotational speed of the wheels in the same measuring cycle the unbalance values are called up by the operator and the unbalance is measured, in which at least one magnetic mounting (6) is provided on the casing (1) of the reference mark scanning devices, and the casing (1) is aligned therewith on a vehicle wheel provided with a reference mark on a mounting (7) or a drive device (15) in which the casing (1) has an opening (3) on its side (2) facing the vehicle wheel, for an optical emitter and receiver, and in which the casing (1) bears illuminable control openings (4,5) on its casing surfaces (17,18) which are orthogonal to the side (2), said surfaces being essentially parallel to the upright surface of the powered vehicle, the illuminable openings then lighting up if the marking applied to the vehicle wheel is recognised by the optical receiver.

## Revendications

1. Dispositif de détermination des effets de balourd sur des roues soutenues et entraînées d'un véhicule automobile, comportant un dispositif de mesure du balourd avec convertisseurs de vibrations et appareils de détection de marques de repère, dans lequel l'alimentation en courant continu de l'appareil de mesure du balourd (9), des convertisseurs de vibrations et des appareils de détection de marques de repère (1) est assurée par la batterie (11) du véhicule automobile, dans lequel lorsque les roues sont entraînées par le moteur du véhicule, à chaque roue entraînée et soutenue est associé un appareil de détection de marques de repère (1) et un convertisseur de vibrations, dans lequel, sans essai de fonctionnement à vitesse constante des roues du véhicule, produite par l'opérateur en appuyant sur l'accélérateur, la vitesse de chaque roue est signalée au dispositif de mesure du balourd (9), et dans lequel dans la plage de vitesses correspondante des roues, les valeurs du balourd sont appelées par l'opérateur, dans la même séquence de mesure, et la mesure du balourd est effectuée, dans lequel sur le boîtier (1) des appareils de détection des marques de repère il est prévu au moins une fixation magnétique (1) avec laquelle le boîtier (1) est orienté vers une roue du véhicule pourvue d'une marque de repère sur un support (7) ou sur le dispositif d'entraînement (15), dans lequel le boîtier (1) possède, sur son côté (2) tourné vers la roue du véhicule, une ouverture (3) pour un émetteur et un récepteur optiques, et dans lequel le boîtier (1) porte, sur ses surfaces (17, 18) orthogonales au côté (2), qui sont sensiblement parallèles à la surface d'appui du véhicule, des ouvertures de contrôle (4,5) lumineuses, qui s'allument lorsque le marquage apposé sur la roue du véhicule est détecté par le récepteur optique.
